# EUROPEAN PATENT SPECIFICATION

(11) **EP 1 282 887 B1**
(45) Date of publication and mention of the grant of the patent: **04.11.2009**
(21) Application number: 01932468.0
(22) Date of filing: 16.05.2001
(51) Int. Cl.: G06Q 30/00

(54) **A BILLING SERVICE SYSTEM AND METHOD**
VERRECHNUNGSDIENSTSYSTEM UND VERFAHREN
SYSTEME ET PROCEDE DE SERVICE DE FACTURATION

(30) Priority: 19.05.2000 US 574318
(43) Date of publication of application: 12.02.2003
(73) Proprietor: Swerup, Jan, 741 95 Knivsta (SE)
(72) Inventor: Swerup, Jan, 741 95 Knivsta (SE)
(74) Representative: Svanfeldt, Hans-Åke
(86) International application number: PCT/SE2001/001075
(87) International publication number: WO 2001/091066

(56) References cited:
- EP-A2- 0 745 947
- WO-A1-99/10823
- US-A- 5 794 221
- US-A- 5 963 925
- US-A- 5 970 475
- US-A- 6 032 133
- US-A- 6 047 051
- US-A- 6 049 786
- US-A- 6 052 671
- US-A- 6 052 674

## Description

### TECHNICAL AREA

The invention relates to a system and method for handling of invoices in a small business corporation. A freestanding billing service provider, that is not part of or owned by a bank or a payment system, or does not have a private technical interface to such organizations, provides billing services to clients over the Internet. The billing service provider runs a billing server or network of billing servers. A billing server receives billing information from client companies by e-mail, assembles invoices to customers of the clients, distributes the invoices to the customers of the client companies, receives information on payments made by the customers and handles the ledger of each client. Client companies communicate with the billing server via the billing service provider's web site.

### KNOWN TECHNIQUE

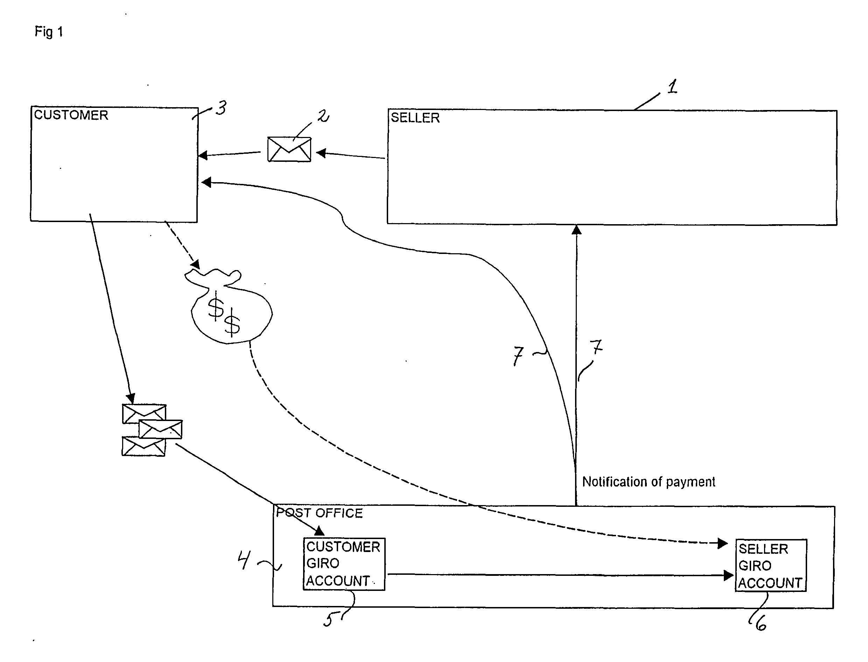

Refer to Fig. 1. In Sweden most people pay their invoices over postal giro or bank giro. Postal giro is a payment forwarding system for cash-less transfer of amounts between accounts. Other transactions are paying in and paying out. When the sender and the receiver both have a respective postal giro account, or a respective personal account, payment is done by transferring. The sender fills in a transfer-slip and a payment order that both are sent to the Post Office in a postage-free letter provided by the Post Office. When the transfer has been accomplished the sender and the receiver are both notified thereof. For paying in to a giro account an inpayment card or a check is used which is sent to the Post Office in a postage-free letter.

Typically a seller 1 sends an invoice 2 to a customer 3 in a letter. Attached to the invoice is a transfer-slip. Transfer-slips are of a standardized size and have a standardized layout of various fields, such as giro account field, address field to be used by the seller, address field to be used by the seller's customer, amount to be paid, and general information field for use by the seller. The seller personalizes the transfer-slip by filling in information concerned in the various fields. In the general information field he may for example indicate the due date for the payment, the products/services to which the payment relate. The customer receives the invoice and the personalized transfer-slip via the postal mail service and pays the invoice either cash at a Post Office 4, as shown with the dashed arrows, or via his own giro account 5, as shown with the solid arrows. Finally the amount is transferred from the customer's giro account to the seller's giro account 6.

If paid cash the customer presents the transfer-in slip to the cashier who collects the money and the transfer-in slip and gives the customer a dated receipt that confirms the amount paid and the giro account to which the payment has been transferred. The seller and the customer are notified, arrow 7, of the payment by a statement of account that is assembled and printed by a giro service processor and delivered via the postal mail service.

If paid via the customer's own giro account the customer puts his signature and his own giro account number in a special field on the transfer-slip, thus accepting that the invoice amount is drawn from his giro account. The customer also prepares and signs a payment order to the giro system. The customer sends the payment order together with the transfer-slip to the Post Office. The Post Office upon receipt of these documents checks the customer's giro account to see if the funds are good for payment of the invoice. If the transaction is cleared, the Post Office draws the corresponding sum from the customer's account and transfers it to the seller's giro account. Notification takes place as described above.

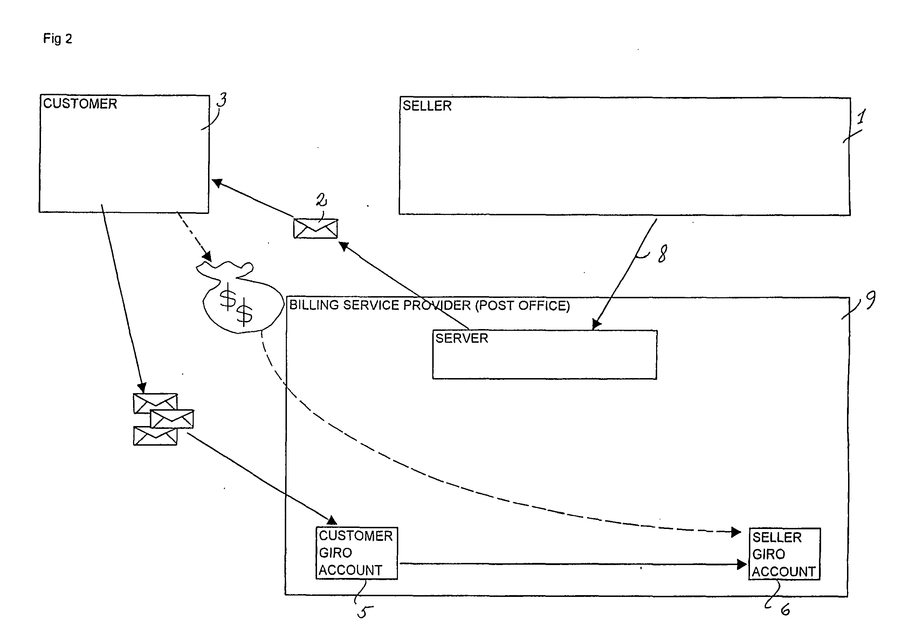

Refer to Fig.2. Postal giro also offers a billing service to companies that per year are billing for more than a predefined large sum or to companies that per year are sending out more than a predefined number of invoices. Typically large companies and companies that are debiting their customers at regular intervals, such as a telephone company, an electricity company, a refuse collecting company and others, make use of this service. The billing service is so organized that the company subscribes to a so called OCR account with the Post Office. A company that subscribes to the billing service is given an individual OCR account. An OCR account receives payments from billed customers. A payment to an OCR account is made with a transfer-slip, similar to the one described above. The payments received at an OCR account are batch-wise transferred to the holder of the OCR account, i.e. the billing company. On the transfer slip the invoice is referred to by an OCR-reference number which comprises a number of digits. The digits of the OCR-reference number are printed in a separate OCR-field on the standardized transfer-slips described above. These digits are printed in a font that can be read by an optical character reading (OCR) device. When customers are billed, the seller 1 subscribing to the giro billing service sends billing information, arrow 8, to a billing service provider 9. The Post Office thus acts as the billing service provider. The billing service provider assembles the billing information, prints, for each customer, a personalized invoice and an accompanying personalized transfer-slip. Often the two are printed on a common sheet of paper separated by a tear line or perforation. The giro billing service provider sends the two (invoice and transfer-slip) by postal mail to the customer. Typically the billing service provider uses a printer or adjunct machines that fold the invoices into sealed envelopes with address windows, preferably also with some sort of automatic postage.

The customer pays the invoice using either of the two above described methods (cash payment or giro payment). Notification of the payment takes place as described above.

Bank giro is a system for transfer of funds preferably between holders of bank accounts wherein the holders have enrolled to the bank giro system. From a bank giro account out-payments can be done to receivers that do not have a bank giro account. In-payments to a bank giro account can be made via a bank office. After agreement between the seller and the customer transfer of funds between bank accounts can be made automatically ("autogiro").

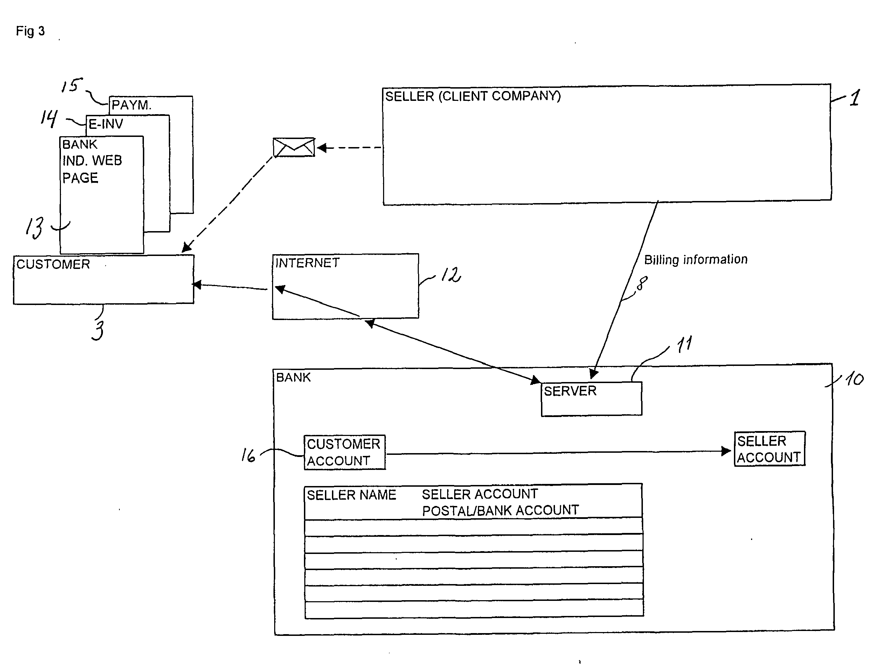

Refer to Fig. 3. A service named Bank via Internet has many implementations. Foreningssparbanken provides one such. A bank 10 has a server 11 connected to the Internet 12. The bank has a web site on which it provides each customer with an individual web page. A customer logs on to his individual web page 13 by an authentication procedure involving the use of a personal electronic card (active Card X9.9 Token by ActiveCard Networks Inc., San Fransico). The individual web page displays the balance of the customer's bank accounts. Clicking an icon on the individual web page accesses a service "Electronic invoice" 14. Following an agreement between the customer and the seller, the seller -instead of sending the invoice by postal mail to a customer as shown with the dashed line- sends the corresponding billing information 8 to the bank. The bank publishes the electronic invoice on the customer's individual web page. If the customer accepts the invoice he also has to state which of his accounts shall be used for the payment. From this account the bank transfers the payment to the seller. Both parties are notified of the payment. Clicking another icon on the individual web page accesses a service "Payments" 15 the postal as well as bank giro service is accessed. At he Internet server the customer builds -using another web page of the bank- his own database comprising the name and postal or bank giro account of each seller. Invoices that the customer receives via postal service are paid in the following manner: On the web page "Payments" the customer scrolls- for each invoice- a field "Payment receiver" in his data base until the correct name is found. When found the customer enters, in another field, the amount to be paid, and in still another field, which of the customer accounts to be used for the payment. When all invoices have been entered the customer clicks another icon "Sign payment order", another web page is displayed, This page displays the total amount and prompts the customer to give a cryptogram representation of the total amount using the above personal electronic card. The cryptogram representation is the customer's electronic signature on the payment order. The bank checks the ordered payment against the customer's accounts 16 and if the funds are sufficient the payment order is cleared and payments are transferred to the account of the respective sellers. The sellers and the customers are notified of the payments. If a seller is subscribing to the Post Office billing service, the customer has to enter the OCR reference number printed on the transfer -slip that accompanies the invoice. If the seller in the last sentence has an agreement with the customer that electronic invoices should be sent to the customer's bank, then the customer need not enter the OCR code.

### TECHNICAL PROBLEM

In a business corporation handling of invoices is expensive. In particular printing invoices, delivery of the printed invoices to the customers, updating customer accounts and sending out payment reminders to customers require well-defined corporate routines in order to keep the costs for invoice handling low. In newly started as well as in small business corporations, even when using so called e-commerce, these routines are often less well-established thus requiring much labor work or high costs. There is also a risk of making mistakes. An object of the present invention is to expedite, facilitate and streamline invoice handling in a corporation. This is achieved with the means specified in the claims. In particular a corporation interworks with a billing service provider that provides streamlined, well-established routines such as printing and delivering of invoices, balancing customers' accounts and delivering of payment reminders. Customers payments are received by a payment system, such as bank, a postal giro service , a bank giro service, with which the billing service provider inter-works to obtain information on received payments. Based on this information the billing service provider updates the customer accounts.

To qualify for a subscription to an OCR account, a company or organization must bill more than SEK 15 millions per year. Small business entities billing less than said amount are thus excluded from subscribing to the service. Another object of the present invention is to make the giro billing service available to small entities. This is achieved by the means specified in the claims.

Still another object of the invention is to provide a billing service system that provides enhanced postal as well as bank giro billing services, in particular a billing service using a conventional e-mail system for forwarding invoices to customers.

EP 0745947 relates to en electronic bill presentation and reconciliation system of a general kind wherein a biller sends billing information to the bill presentation system. A customer logs on to the system and the system presents the bills to the customer electronically. The customer marks the bills he/she wants to pay and sends a payment instruction to the system. The system instructs the customer's bank to pay the indicated amount to the vendor's bank.

WO 9910823 also relates to an electronic bill presentment system for use by companies that already have an invoicing system.

US 6052674 discloses a general electronic commerce invoicing and collection system designed to collect customer payments. If payment is late, the system assesses surcharges and records the payment behavior of the customer.

US 6052671 relates to a computerized billing and payment system with means for verifying the billing information prior to the bill is presented to the customer.

US 5794221 relates to electronic commerce over Internet. The amount due for products that are purchased is immediately drawn from an account that belongs to the customer.

### SUMMARY OF THE INVENTION

The billing service system and method in accordance with the invention is defined by the appended claims.

An object of the billing server is to generate invoices, and capture and store information relating to the generated invoices and store information on received payments. An object of the payment system, for example the postal giro service or the bank giro service, is to receive payments on client accounts and to provide information on received payments to the billing server. An object of the web site is to publish information on invoices and received payments so as to present this information to a client company in a customized and user friendly way. The client company is one of many clients to a billing service provider. The billing service provider provides the publication based on information residing in the billing server. An object of the web browser is to make the information on the web site visible to a person at the client company. An object of the client computer program is to provide means for inputting billing data for transmitting inputted billing data to the billing server. The billing system is so arranged that all communication between the billing server and the payment system takes place in a secure manner, by using secure modem connections over which information is transmitted in encrypted format. Communication between the client company and the billing server takes place over the Internet, typically using e-mail in the direction from the client to the billing server and using web site publishing in the direction from the billing server to the client company. Billing information is sent from the client to the billing server in an e-mail over the Internet. Alternatively a client company running an e-commerce web site may transfer files to a file-server connected to the Internet using FTP (File Transfer Protocol). The billing server connects to the Internet only for short periods during which it polls its Internet mailbox/file-server and downloads received e-mail/files. To access the web site a client company user typically uses a security code (PIN). It is the billing server that takes the initiative to receive and to transmit all the information it handles. The billing server can be distributed over several processors that are interconnected by a private or public network providing data communication services. This distribution implies a division of the server's functions and/or its operational capacity.

The billing service provider runs a billing server with access to the Internet. The billing service provider provides a general as well as an enhanced billing service further to the above postal billing giro service. When the billing service provider provides the postal billing service the billing service provider's server will have access to a postal giro server of the Post Office and will use the giro server's protocol in order to capture amount paid, the date on which payment was received and the OCR reference number.

A small business corporation subscribes to the billing service provided by the billing service provider and receives in response thereto the above mentioned client program. A subscribing small business company thus becomes a client of the billing service provider. An example of a small business corporation is an enterprise that sells goods or services to customers. Another example of an entity that can subscribe to the billing service of the billing service provider is a landlord or a corporation sending out monthly rental invoices. In the latter case the tenants of the respective apartments owned or administered by the landlord or by the corporation are thought of as being the customers of the landlord or of the corporation; the landlord or the corporation being the client of the billing service provider. Should the client company not already have Internet access and e-mail these services will be provided by an Internet Service Provider ISP or by the billing service provider. Access to these services requires that the client company has a computer (PC), an Internet browser, such as Netscape Navigator or Internet Explorer and an e-mail program/FTP-program. Alternatively, the client may have a smaller type of computer such as a handheld computer, a palmtop or even a telephone as long as it has the corresponding capabilities, such as a WAP browser.

The client computer program comprises code for building two databases; one for recording information on customers that are to be billed and one for recording information on goods or services provided by the client company. The client program further comprises code for managing all communication required in connection with billing. The client program also contains code for indicating the identity of the respective server or servers to which e-mail/files containing billing information should be sent and code for building server indexing.

### BRIEF DESCRIPTION OF THE DRAWINGS

Fig 1 is a block diagram of a bill payment system using the giro service for billing, funds clearing and settlement when a consumer is using a postal service for placing bill placement orders,
Fig 2 is a block diagram of the same giro service when a consumer is using a bank's Internet web page is for placing bill payment orders
Fig 3 is a block diagram of the same giro service when a consumer is using an electronic bill service, provided by his bank, for placing bill payment orders
Fig 4 is a simplified block diagram of a basic embodiment of the present invention to provide the giro service for funds clearing and settlement to small business entities
Fig 5 is a block diagram of a second embodiment of the present invention, wherein the client uses a web browser instead of e client SW
Fig 6 is a block diagram of a third embodiment of the present invention, wherein the client uses a WAP browser in a pocket phone instead of a web browser,
Fig. 7 is a block diagram of a fourth embodiment of the present invention, wherein the billing server sends invoices by e-mail to customers
Fig. 8 is a block diagram of a fifth embodiment of the present invention, wherein the customer pays invoices by phone
Fig. 9 is a block diagram of a sixth embodiment of the present invention, wherein the billing server is distributed over several computers
Fig. 10 is a block diagram of a seventh embodiment of the present invention, wherein the billing server orders printing of the invoices with a service bureau
Fig. 11 is a block diagram of a eighth embodiment of the present invention, wherein the billing server comprises a general book-keeping program

### DESCRIPTION OF THE PREFFERRED EMBODIMENTS

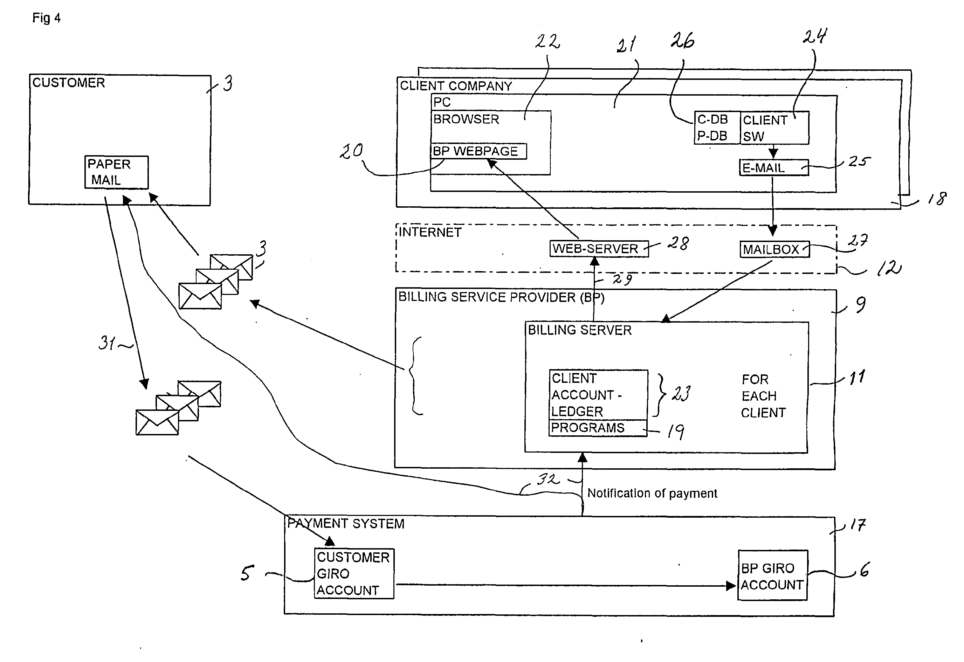

Fig 4 is a block diagram of a first embodiment of the billing system in accordance with the invention. The billing system includes as separate parts a billing service provider 9, a payment system 17, clients 18 to the billing service provider (i. e. the billing companies) and customers 3 to the clients (i. e. the billed parties). It is understood that a client company has sold goods or a service to a customer and is expecting payment for this. To this end an invoice should be sent to the customer. The client companies, however, do not want to handle the billing business, such as sending out invoices and reminders, receiving cash payments directly from customers etc. Instead they buy this service from the billing service provider. The billing service provider has a billing server 11 with access to the Internet 12 and to the payment system 17. The billing server comprises a billing service program 19 together with its associated data. The client companies prepare billing information for each purchase using the client computer program. The billing server receives billing information from the clients, generates and distributes invoices in response thereto, receives payment information from the payment system, checks payments made by the customers against the sent out invoices and, if necessary, generates and sends out payment reminders to customers. The billing server also transfers payment status (paid/not paid) for each invoice sent and transfers this information to the client company. The billing server also generates account status for each client account and provides the clients with their respective account statements. The billing service program performs all these tasks. A customer may also have an agreement with a client company, or with the billing service provider to the end that the billing service provider is allowed to collect amounts due from the customer's bank account using the "autogiro" service.

Billing information from the clients are sent by e-mail or by FTP files to the billing service provider. The e-mails are received at an Internet mailbox/file-server that is checked for incoming information by the billing server at regular or, for increased security, at non-regular intervals. The billing server is thus not permanently connected to the Internet. This being the case, there is a minimum risk that the billing information is tampered with by an unauthorized intruder, as the time during which an intruder may access the billing server is restricted to the short time during which the billing server accesses the Internet. The computer of the billing server further has very limited settings for allowing information delivery to the Internet; such limited settings being referred to as a fire wall. An Internet Service Provider provides the Internet mailbox/file-server.

The payments can be received by either an OCR account belonging to the billing service provider, or to the client company itself. In either case the billing server receives information from the payment system on payments received from customers. The billing server publishes, at a web page 20 intended for the client company, the payment statuses of each of the invoices that the client company has transferred to the billing server. For example when the billing server receives information from the payment system, typically a bank, that the bank has received payment for an invoice the published information is updated by the billing server.

In the following the billing system will be described with only one client company, although it is understood that the billing service provider has several clients subscribing to the billing system.

The client company has a computer 21 (typically a common PC), an Internet browser 22, such as Netscape Navigator or Internet Explorer, and an e-mail program/FTP-program. He also has access to the Internet and to an Internet based e-mail service. When a client company subscribes to the billing system the billing service provider creates a client account 23. Each subscribing client company is also given a respective web page 20 residing at the billing service provider's web site. The billing service provider gives to each new subscribing client company the Internet address in the form of a URL (Universal Resource Locator) to the client's web page and possibly an alphanumerical security code that grants access to the client company's web page. The Internet address is associated with the client company.

When a client company subscribes to the billing system it is also given a client software 24 which the client company installs on their PC. The client software comprises code for building a customer database and a product database, commonly denoted 26.

The client program also comprises code for generating an empty invoice, capturing information from the user at the client company, formatting and packetizing data and sending it as e-mail or files 25 over the Internet.

It is the client company user who enters customer data, such as customer number, customer name, postal address, e-mail address, telephone and fax number, to the customer database. It is also the client company user who enters product data, such as product number, name, price, and quantity of each product or service that the client sells or provides to his customers. To each product there is preferably also associated an account number that refers to the client's general account plan as used in the client's bookkeeping system.

### Actions by the client company user

When the client starts the billing application on the client computer the screen will show a form with an empty invoice prompting him to select any of the services: (1) record new order, (2) record new customer, (3) record new product/service, (4) change customer data and (5) change product/service data.

If the client selects the service (1), record new order, the PC presents a form "Record Invoice" to the client. This form appears to the user as an empty invoice and comprises at least (1) a field for selecting the customer's name out of the customer database, (2) a field for selecting, from the product/service database, a name or number of a first item/service purchased by the customer, (3) a field for entering the number of such purchased first items/services, (4) a field showing the per item price of the purchased first item, said per item price being automatically retrieved from the product database when the product number or name is entered, and (5) a field showing the total price of the purchased first item/service, this price being calculated by the client program. When data has been entered in all of the fields (2)-(5) the data in those fields are captured by the client software. Next, fields (2)-(5) are cleared and ready for new data relating to a second item purchased by the same customer. This is repeated for each following item that the customer purchases. When all items purchased by the same customer have been recorded they are presented to the client as a filled in invoice completed with the total amount of the order and the due date for payment. When the order is complete the client clicks on a window button labeled "Send to Billing server". All of the operations described are performed using conventional windowing techniques using list bars for scrolling and buttons for hidden instructions.

All data captured by the client software during the above steps are formatted and packetized into an e-mail/file by the client software. The e-mail/file so formatted and packetized is provided with the appropriate address of the billing service provider. Before the e-mail/file is sent the client computer has to establish a connection typically over the PSTN or ISDN to their ISP (Internet Service Provider). Over this connection the e-mail is sent to an outgoing mail server. From that outgoing mail server the e-mail will be forwarded to the billing service provider's mailbox 27. The billing service provider's mailbox is located at a mail server provided e. g. by the ISP of the billing service provider. In the FTP-case the files are transferred to the appropriate file-server using the FTP protocol.

The client software thus has an invoicing function as well as a forwarding function. Billing information is communicated to the billing service provider via Internet using e-mail or FTP.

If the client user selects the service (2), record new customer, a form is shown with separate fields for entering particulars of a new customer, such as name, address, telephone and facsimile numbers, e-mail address. The customer may also be given a customer number and other additional attributes like discounts, bank account no etc. The client user enters data in the respective fields. When all information has been entered the data entered in the fields are captured by the client software and stored in a customer database in the client's PC.

If the client selects the service (3) a form is shown with fields for a product's/service's name, price and other particulars about the product/service. In a similar manner as above the client enters data in the respective fields and stores it in the product/service database in the PC. If the client selects the services (4) or (5) similar forms as under services (2) and (3) are shown and the client makes the required changes and stores.them in the customer and product database respectively.

It should be noted that it is possible to record a new customer in the customer database by using the service (1), record new order.

A client user opens his web page 20 at the web server of the billing service provider by setting up a connection to an Internet access server via e. g. PSTN, PLMN or ISDN using a conventional communications program, such as those supplied with the Microsoft Windows operating system. Next the client gives the address (URL) to his web page at the web site of the billing service provider. When the site is found the client is prompted to give his security code. Is the security code correctly given the web page will open. The client will see a greeting page prompting the client to select e. g. one of the following web pages: all invoices sent by the billing service provider, all unpaid invoices, all invoices due but not yet paid, all payments received, all payment reminders sent to customers that have not paid within the due date, and the client company's current account at the billing service provider.

### Actions at the PC

The PC has client software 24 that generates the above mentioned forms and that formats and packetizes billing information into e-mails/files that are sent over the Internet. The PC also maintains the above mentioned customer database and a product/service database.

### Actions in the web server

The web server 28 delivers information to the browser on demand. It fetches this information from its memory, which is organized into folders, with at least one folder for each client company.

When the billing service provider initially starts the billing server he uploads to a web server, that is provided by an ISP of the billing service provider, software entities that implement parts of the services provided by the billing service provider; for example software that creates folders for client company files and handles security codes for accessing files in such folders. Information on invoices are sent from the billing service provider to the web server, arrow 29, using the FTP (file transfer protocol) protocol. Alternatively, the web server could be located at the billing service provider's own premises and connected to the Internet with a permanent connection. In such a case the billing server and the web server can cooperate using common memory, a local area network (LAN), a wide area network (WAN) or any other known technique for computer-to-computer communication.

### Actions at the billing server

The actions described below and taken by the billing server take place under control from the billing service program 19. The billing server polls the Internet mailbox/file-server 27 at regular or non-regular intervals to see if there is any e-mail/files addressed to it. E-mails/files received at the mailbox/file-server are thereby downloaded and unpacked. Invoice data contained in E-mails or files is structured and recorded in the client account ledger 23 together with the account numbers of each purchased item. The billing server creates and prints the invoice to the customer to be billed using said invoice data. Typically the billing service provider uses a printer or adjunct machines that fold the invoices 3 into sealed envelopes with address windows, preferably also with some sort of automatic postage. The envelopes are then mailed as letters. The billing server provides each invoice with an invoice number or similar reference for use as an identity of the individual invoice. This number is thus no part of the billing information received via e-mail/FTP. The billing service provider also provides each invoice with an OCR reference number that refers to the invoice number. As stated above the due date for payment is also printed on each invoice.

At the billing server each invoice is recorded at the client account 23 of each respective client company. The identity of the client that sent the e-mail/file is embedded in the e-mail/file itself and is equal to the above mentioned customer number, preferably the organization number. Each invoice comprises, further to information on the billed customer, the purchase the billed customer has made, the amount to be paid, information to which payment system, such as bank, postal giro or bank giro, the payment should be done. To this end the invoice also states an OCR reference number that refers to the invoice number. Said OCR reference number should be quoted to the payment system when the payment is done.

The billing server receives notifications from the payment system. Each such notification is provided with the OCR reference number that was printed on the invoice that was paid. Software in the billing server uses the OCR reference number to identify the customer who did the payment. When the customer identity has been established the billing server balances that customer's account with the received payment.

The billing server also has an invoice list in which it records all issued invoices and their respective due dates. At regular intervals, for example once each day, the billing server checks the invoice list to see if there is any invoice that has not been balanced at the due date. If there is record that has not been paid within the due time, then the billing server identifies the customer and sends a reminder to the customer in question, said reminder indicating to the customer that the invoice has not yet been paid.

Information on invoices, reminders and received payments are sent from the billing service provider to the web server using the FTP (file transfer protocol) protocol, arrow 29. In the case where the client company has a permanent connection to the Internet and has integrated the above mentioned client software in a larger system such as a web based e-commerce system, the billing service provider may send this information to the e-commerce system of the client company using the FTP protocol instead of uploading it to the web server.

The billing service program identifies the client that sent the billing information. To do so it identifies the sender of the E-mail or file. In the alternative the client's identity is included in the billing information.

### Actions at the billed customer

The customer receives an invoice and pays the invoice via the payment system and quotes said OCR reference number. Payments are done using either of the postal or bank giro systems described above. To this end payment slips are sent by postal service to the Post Giro Office or the Bank Giro Central, arrow 31. As indicated above a payment slip refers to the giro account of the customer. The payment may thus be drawn from the customer's giro account at the Post Giro Office or at the Bank Giro Central. Payments can also be made in cash at a post or bank office.

### Actions at the payment system

The payment system receives payments from many customers of many different client companies. The payment system notifies the billing server and the customer of the received amount and the quoted OCR reference number, arrow 32. The billing service provider fetches such information by calling a modem-equipped computer at the payment system, establish a data connection, identify himself and downloading the payment files. It is only possible to fetch information that relates to the billing service provider's own OCR giro account and those of his clients that have their own OCR giro account and that so have informed the payment system that the billing service provider is trusted to fetch payment files. Other methods of transferring information about received payments may also occur.

Payments accumulated at the billing service provider's giro account 6 are transferred to the respective client companies. In cases where clients own the OCR account themselves, this is not necessary. The payment system, the postal giro service or the bank giro service is used for this purpose. As noted above the client company can check all payments received using a web browser.

Except from the transmission of billing information over the Internet it is evident that all invoice handling, such as printing and delivering of invoices, payment notifications and reminders, will take place outside the Internet, thus providing a billing service system that is secure because it will be difficult to manipulate - from within the Internet- billing data and payment transactions.

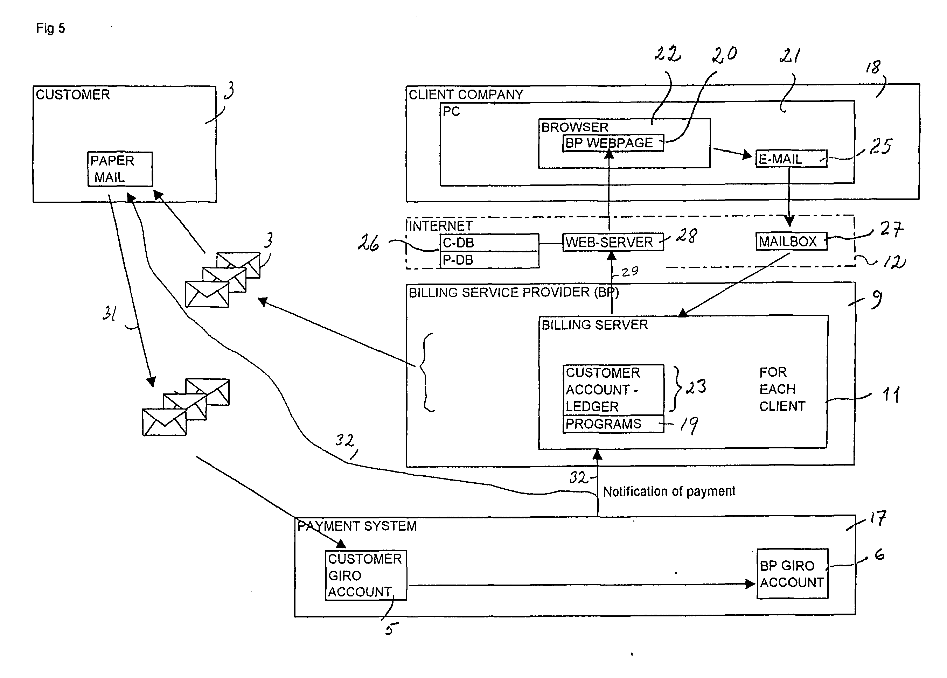

According to a second embodiment of the invention shown in Fig 5 the software for building and maintaining the customer as well as product/service databases and for arranging and sending the above mentioned e-mails/files with invoice information resides in web server 28 and not in the client's PC. In this embodiment all debiting actions taken by a client company user is web based, while in the first embodiment they are PC based. The client software of the first embodiment has been modified and is integrated with the previously described web server software that initially is uploaded from the billing service provider to the web server. The forms previously described in connection with services (1)-(5) above are generated by the web server as web pages. Said web pages, instead of being provided with a window button labeled "Send to Billing server" are provided with a window button "SUBMIT".

In a similar manner as described in the first embodiment, the client user connects to the web server, provides the user password, meets a similar greeting page, selects any of the services (1)-(5), is presented a blank form in a window and enters data in it. When the selected form has been completed the client presses the SUBMIT button and the data is transferred to web server using the http protocol. The web server receives the submitted data, organizes and maintains customer and product/service data in customer and product/service databases 26. Billing data are formatted and packetized into e-mails/files. The e-mails/files are also provided with the above mentioned client number, preferably the client's organization number. A CGI script in the web server addresses the e-mail to the billing service provider and sends the e-mail over Internet to the billing service provider. In the FTP-case the script uploads the file to the file-server using the FTP protocol.

In a similar manner as described in the first embodiment the information on invoices and payments that the billing service provider has recorded are sent to the web server from the client's account 23 at the billing service provider using the FTP protocol. In the second embodiment the client does not need to start the web browser in order to see said invoice information, since the web browser was started when the client connected to his web server.

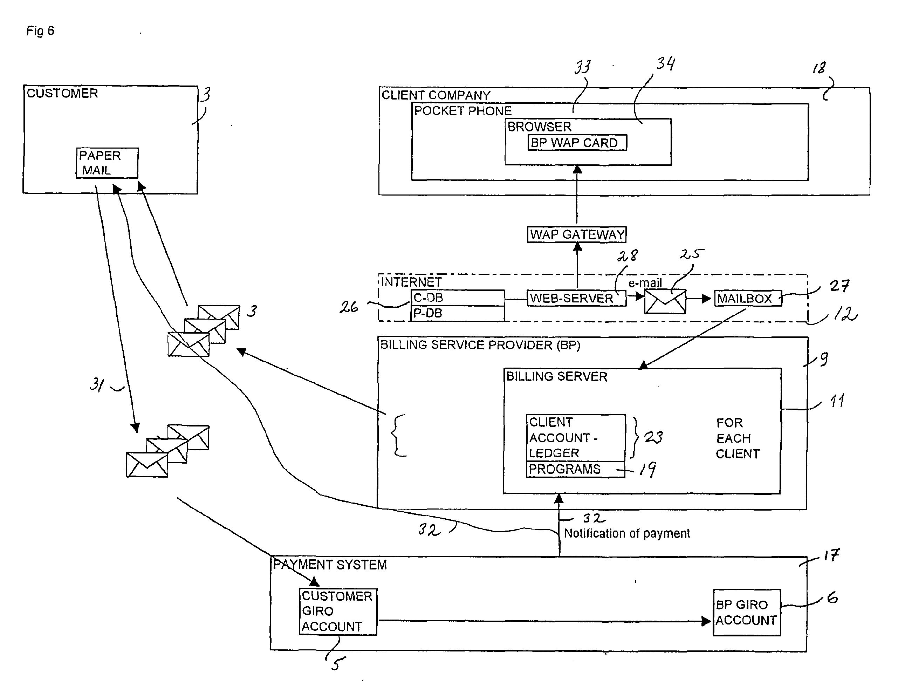

The embodiment shown in Fig 6 is similar to that of Fig 5 except that the client's PC is replaced by a pocket phone 33 such as a mobile telephone. Thus web based debiting actions from the client's view is contemplated. To this end the pocket phone has a WAP or an HTML browser 34 that shows information from and sends information to the web server 28 using the WAP (wireless application protocol) or the http protocol respectively. Billing information is entered on the key board of the pocket phone. The billing information is forwarded from the pocket phone to the web server over at least an access network to the pocket phone, using a message or a data service of said access network. There may exist many different networks, such as corporate LANs, IP based intranets between said access network and the Internet. From the web server 28 the billing information is sent to the billing service provider using e-mail/FTP-transfer 25 in the manner described in connection with Fig 5. On a display of the pocket phone the client user can check his account with the billing service provider using a WAP or HTML browser in the pocket phone.

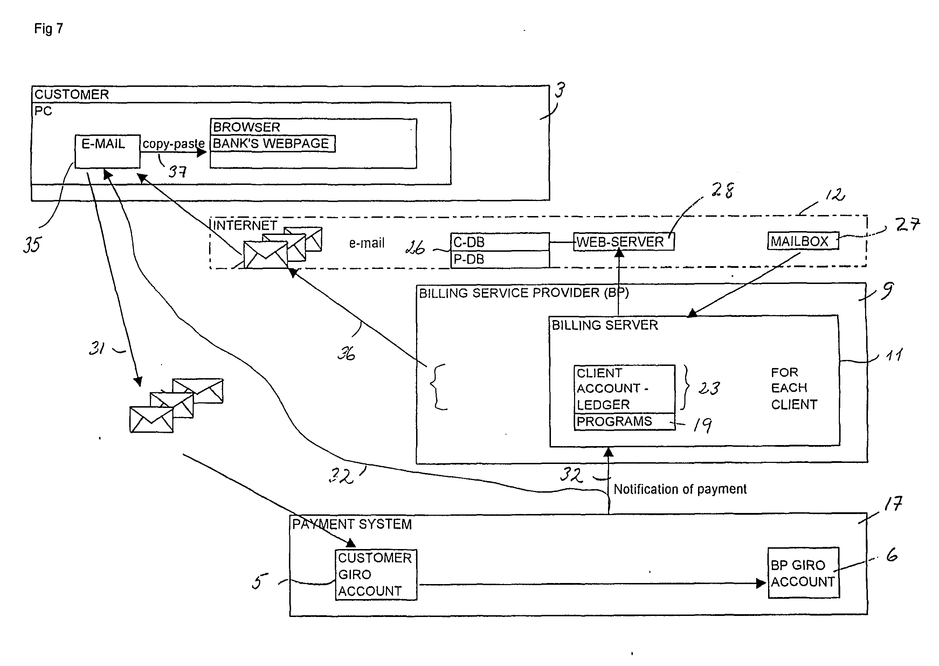

Still another embodiment of the invention is shown in Fig. 7. The embodiment of Fig 7 may be combined with any of the embodiments of Figures 4, 5, 6, 9 and 11. In the embodiment of Fig 7 the billing server 11 does not print invoices nor are printed invoices sent by postal service to the customers. Instead the billing server prepares electronic invoices 35 that are sent by e-mail, arrow 36, to the customers via Internet 12. As mentioned above the customer database 26 may contain the e-mail address of the customers. If so, the use of electronic invoices and e-mail will speed up the delivery of invoices and, more importantly, will provide for an economic handling of invoices, since no postage expenses are incurred. The use of electronic invoices and e-mail addressed directly to the customers is more user friendly than today's electronic invoices residing at the customer's bank or payment system.

Invoices of the latter kind will be available to the customer only after a customer and has connected to his bank's web page, has entered a bank specific security code that gives access to the customer's web page at the customer's bank or payment system. To prepare the bank specific security code is a rather complex and time-consuming procedure that must be exercised with great care on behalf of the customer. Also a special code-generating device is often required. In accordance with the present invention an e-mail invoice is addressed to the customer's e-mail address and will be handled as a normal e-mail. Normal e-mails require no special action on behalf of the customer other than the normal log-in procedure to his mailbox. The invoice e-mail contains either the electronic invoice itself or a link to a web page containing the invoice.

In the embodiment of the invention shown in Fig. 7 a customer pays his electronic invoice using a bank's electronic giro service using the conventional copy-paste 37 method for transferring the OCR reference number accompanying the electronic invoice to his payment order. In the alternative an electronic invoice may also by paid using postal giro service, bank giro service or in cash at a post or bank office as described in connection with Fig. 1.

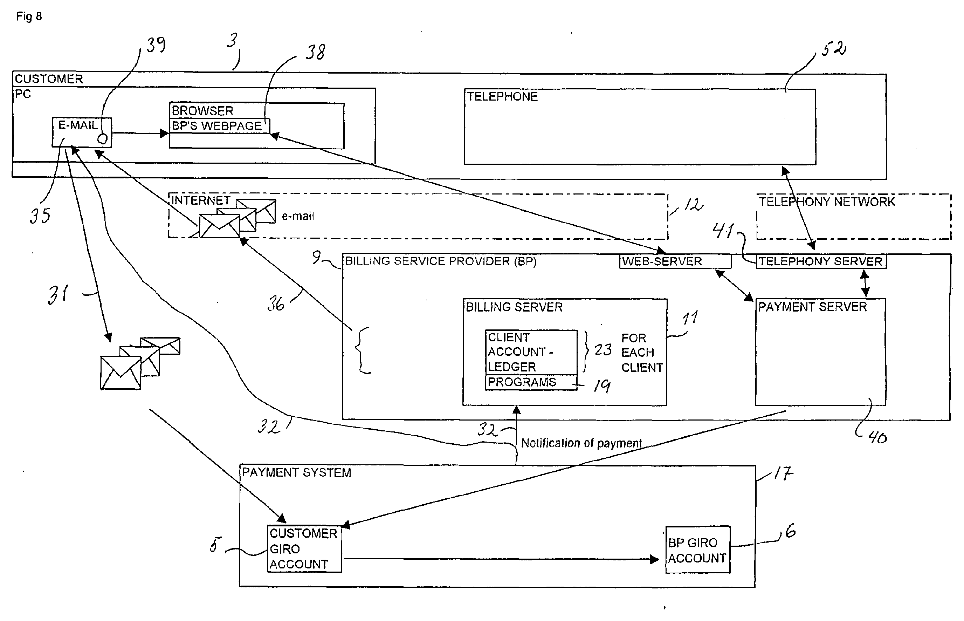

The customer can also agree with the billing service provider or the client company to do future payments in an easier way with the technique shown in Fig. 8. This necessitates first signing an agreement allowing the billing service provider to draw funds from the customer's bank account using "autogiro" and also to provide a telephone number that is personal i. e. only accessible by the customer himself or people that he trusts. Future invoices will then be received through e-mail containing either the invoice itself 35 or a link to a web page 38 containing it. Each invoice will contain an OK button 39 or other type of control which when pressed will activate a program that over the Internet initiates a special payment routine at a payment server. If the electronic invoice resides on the web, that web page 38 may also contain other unpaid invoices for the same customer. Invoices on the web contain an individual, or a common OK button. When the customer presses the OK button, information is transferred to the billing service provider's payment server 40 that the customer agrees to pay the invoice. The billing service provider executes a security check over the phone. The payment server instructs a telephony server 41 to make a call to a phone number that is fetched from the customer database. The payment server cooperates with the telephony server over e. g. a local area network and instructs it to play certain voice prompts to the customer and to report back the customer input given by him, typically through DTMF tones. The security check can be made simple, as the customer is previously signed up with and is known to the billing service provider and his personal phone number has been registered and that phone is now used as a secure sign of identification of the customer when he accepts payment of the received invoice. Correspondingly the customer knows from the calling line identification, that the call is from the payment service that he has signed up with.

Also other communication methods than a phone call are conceivable as long as both parties can securely identify each other. In the communication that follows the billing server asks the customer to confirm the payment. This may be done by keying in a PIN (personal identification number) code on the keypad of the phone, the code being agreed upon the setting up of the subscription. Alternatively a short security code visible on the invoice can be used instead of the PIN code. The code can be common for many invoices or individual for each invoice, and it may even change from time to time. Invoices are identified in a simple way, either with only a short number, typically one digit, uniquely identifying invoices among the list of unpaid invoices for the customer, or by the destination account no and amount to be paid. The simple security check could also be performed be prompting for a simple YES/NO response by pushing e. g. the star/hashmark (pound) button, or even by just answering/non answering the phone call from the payment service in which case the user does not identify the invoices at all.

Customers that are signed up may also place electronic orders over the phone, by calling a "sales" phone number of the billing service provider's telephony server. As the phone number is agreed to be personal, the customer is identified through the calling line identification (CLI) number. A number of products and prices are presented and the customer is prompted to key in the type of product and the number of units he wants of each product. One special case is the reporting of metering values for gas, electricity etc. Immediately after the ordering, an invoice may be e-mailed from the billing server to the customer as described above. The customer may in this case accept the payment over the same phone call he used for ordering. After the customer has confirmed the payment, the company can ship the goods without taking any credit risk.

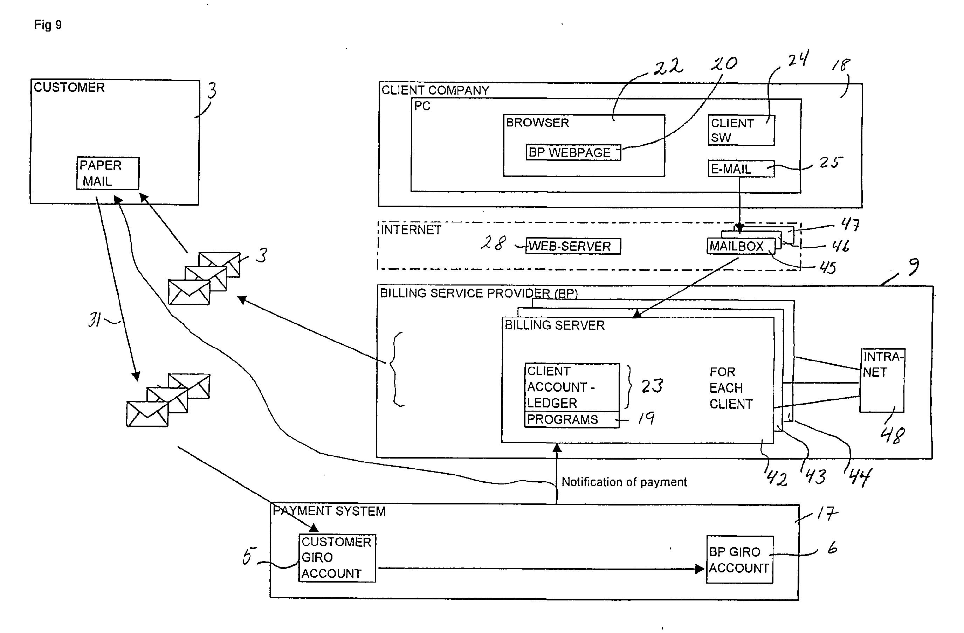

In Fig. 9 still another embodiment of the invention is shown. This embodiment is similar to that in Fig.4 with the exception that the billing server 11 is distributed on several billing processors 42, 43, 44. Each billing processor has a respective e-mail mailbox/file-server 45, 46, 47 with its own address. A private or public network 48 providing data communication services interconnects all billing processors. The processors form a processor system with a control system that distributes the jobs between the processors. Distributed billing processors are used for several reasons. One is that clients may be spread over wide geographical areas. In order to increase the availability of the services that the billing service provider is offering additional billing processors are located in strategic locations. Another reason is to obtain load distribution among the billing processors thus avoiding that jobs received from many clients are executing on one and the same billing processor, thus slowing down the execution of the jobs. In this embodiment the client enters the billing information as described in connection with Fig. 4. The web server, or file-server used by the billing service provider comprises a file with address information specifying to what address (e-mail or ftp) an invoice from a specified client user shall be sent/uploaded at this particular point in time. Before billing information is sent over the Internet, the client company's client software connects to the billing service provider's web server 28, which is common to all of the billing processors, to capture addressing information regarding which of the billing servers that is to handle forthcoming invoices. After capturing this information the e-mail/file containing the billing information is sent/uploaded to the indicated address. If the billing system uses web based debiting as described in connection with Fig. 5 the e-mail routing information is captured from the billing service provider's web server and no separate connection to the web server is required since this connection already exist. The control system of the distributed processors may upload the addresses dynamically in response to the load of the individual processors.

Each billing processor prints customers invoices. Invoices to customers that have postal addresses in the geographical vicinity of a processor are preferably printed by said processor and are distributed to the local post service in this area so as to speed up delivery of the invoices to the customers. In this embodiment it is sufficient that one of the billing servers 42 - 44 is connected to the payment system.

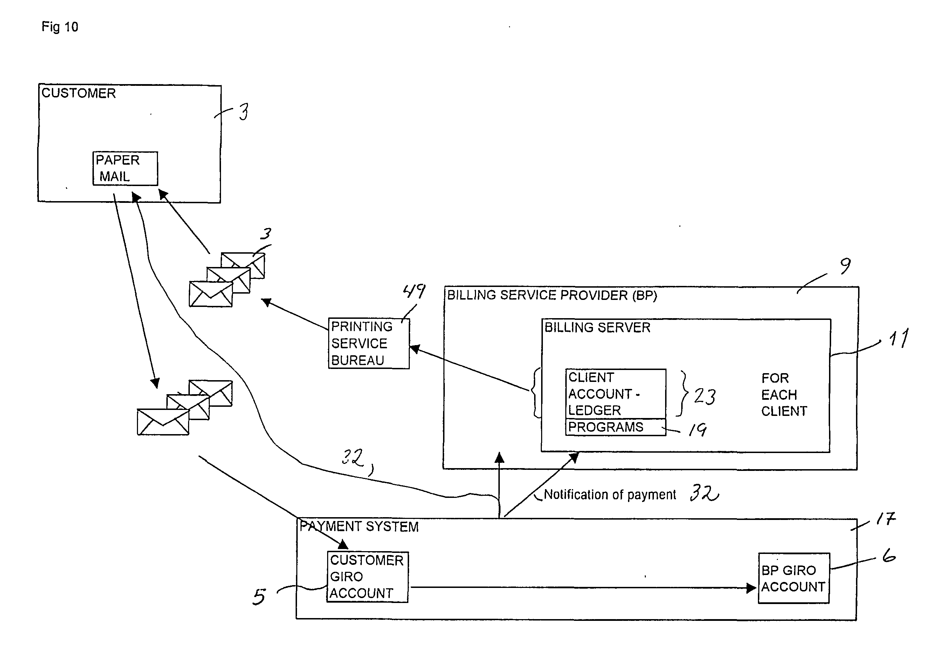

In Fig. 10 still another embodiment of the invention is shown. This embodiment is similar to that in Fig. 4 with the exception that billing server does not print invoices. This job is instead done by a printing service bureau 49 to which the billing server 11 is connected. An example of a printing service bureau is the post giro billing service.

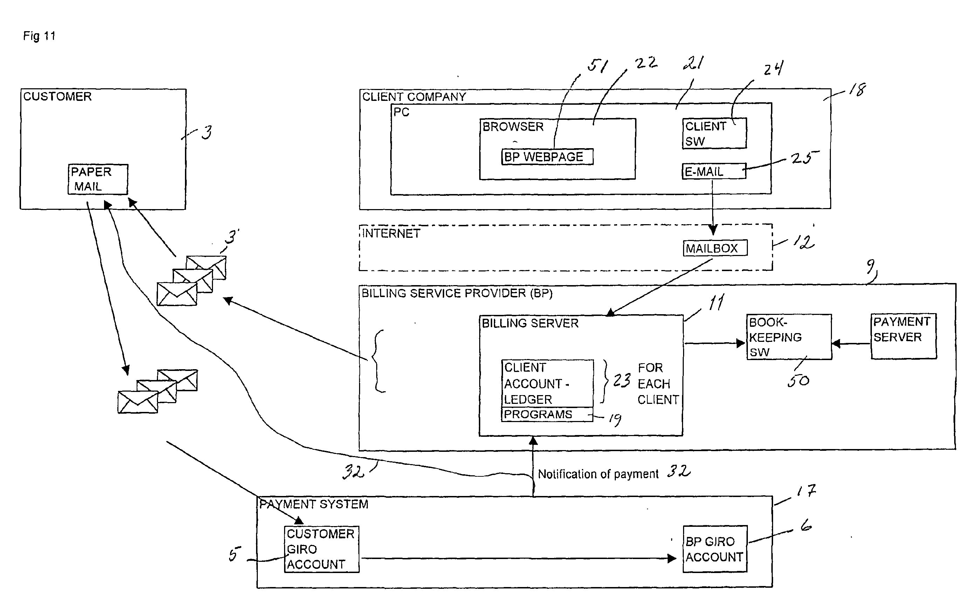

According to still another embodiment of the invention shown in Fig. 11 the billing service provider runs a general purpose bookkeeping program 50. The client companies 18 of the billing service provider 9 are offered a bookkeeping service, that is the billing service provider does the bookkeeping for them. A separate bookkeeping is made for each client company with the aid of a bookkeeping program that is run at the billing server. The bookkeeping program comprises a general account plan which can be tailored to a client's specific requirements. When the client user selects service on his PC he may select still another service, "enter transaction in the bookkeeping". If the user selects this service he will meet a new bookkeeping web page 51 with windows for entering transaction data such as debit account number, credit account number, amount of the transaction in debit, amount of the transaction in credit, description of the transaction in debit and description of the transaction in credit. An account number may, in a manner known per se, be connected to several counter accounts. A typical transaction is recording a customer's invoice. Another typical transaction is that the client company pays its own (received) invoices or purchases of goods. Transactions are entered by the client company user on his PC 21 or phone 52 (Fig. 8), using the bookkeeping page 51. The information entered on this page is sent by e-mail/file to the billing server using similar information handling procedures as described in connection with Fig. 4, 5 and 6. Preferably the client program provides the e-mail/file with a reference that indicates to the billing server that it comprises bookkeeping information. The e-mail/file is received by the billing server which in turn enters the bookkeeping information into the client company's bookkeeping.

It should be understood that the billing server, upon reception of billing information from the client company and upon reception of customer payments from the payment system automatically enters the corresponding information at the appropriate account numbers in the appropriate client company's bookkeeping.

The billing server may also handle a client company's own payments. In an e-mail/file, sent to the billing server a client company orders the billing service provider to pay an invoice for example. Such an order may also be transferred over the Internet using a submit procedure with a post command of the http or WAP protocols. Client payments not done through the billing service provider's payment service, but for example by cash or by credit card in a shop are recorded by the billing service provider upon the receipt of information sent from the client using a pocket phone 33 (Fig. 6) or a computer equipped with an Internet browser. In this manner the billing service provider will act as a virtual bank to the client in that the billing service provider receives payments intended for the client company and makes payments for the client, using these received payments. In contrast to a bank the billing service provider, however, does not invest client funds. Client funds are held in trust (administered) by the billing service provider. Payments may also be drawn from the client's bank account, provided he has previously trusted the billing service provider to make withdrawals from his bank account using e. g. the before mentioned "autogiro" service. When an amount has been transferred to the billing service provider's account, he will transfer the money to the final receiver using normal giroing. It should be understood that the billing server, upon reception of payment orders from the client company automatically enters the corresponding information at the appropriate account numbers in the appropriate client company's bookkeeping. Additionally the billing service provider may, if the client has subscribed to such a service, transfer the appropriate amount to the client's card account with a bank and deduct the paid amount from the client's account. In order to operate such a transferring service smoothly, the card account should preferrably not suffer automatic withdrawals from the bank for monthly account fees etc.

## Claims

1. A billing service system comprising a billing server (11) for generating invoices based on billing information provided by a client (18) of the system, means (25) for transferring the billing information to the billing server, wherein said means (25) comprises e-mail, or files addressed to the billing server and transported over the Internet (12), and a payment system (17) for receiving payments from customers to said client and for notifying the billing server of the received payments, the payments relating to the invoices, **characterized in that** the billing server is freestanding from the payment system and has access to a giro-server at the payment system with the billing service providers own OCR giro account, wherein the billing server generates an invoice with an OCR-reference number, and uses a protocol of the giro server for capturing an amount paid, the date of payment, and the OCR reference number from the giro server.

2. A billing service system in accordance with claim 1, wherein the client has a computer (21) **characterized by** client software (24) running on said computer for building and maintaining a database (26) which comprises a customer database and a product database, the customer database comprising name and address information on the client's customer, the product database comprising, for each product, product name and product price, said billing information referring to information in said product and customer databases, said client software (24) providing, on the computer's screen, an empty invoice page to be filled in by the client with billing information, said client software further formatting and packetizing said billing information into said e-mail or file, said client software comprising code for forwarding said e-mail or file.

3. A billing service system in accordance with claim 1 comprising a web server (28) for communication with the client (18), and said client having a web or a WAP browser (22) for maintaining said communication **characterized by** software running on said web server (28) or on a server (42, 43, 44) cooperating with said web server for building and maintaining a database (26) which comprises a customer database and a product database, the customer database comprising name and address information on the client's customer, the product database comprising , for each product, product name and product price, said billing information referring to information in said product and customer, said web site providing an empty invoice which via said web browser is shown on the computer's screen and which is to be filled in by the client with billing information.

4. A billing service system in accordance with claim 1, 2 or 3 **characterized by** said billing server (11) being provided with means (19) for connecting to the Internet and polling said mailbox and file-server for only short periods of time with the main objective of downloading e-mails and files therein.

5. A billing service system in accordance with claim 1, 2 or 3, **characterized by** several billing servers (42, 43, 44) interconnected by a local network (48).

6. A billing service system in accordance with claim 1, 2 or 3 **characterized by** said billing server comprising for each client a ledger (23), said ledger comprising an account for each customer of the client and each customer's balance.

7. A billing service system in accordance with claim 6 **characterized by** said billing server comprising, for each client, a bookkeeping system (50), bookkeeping information being generated by the server itself or received via e-mail or file transfer to the billing server (11) from the client software (24) or from a web server (28) or from a web server cluster.

8. A billing service system in accordance with claim 7 **characterized in that** the billing server (11) is provided with means for handling payments requested by a client (18) of the system, the billing server using, for said payment, funds accumulated at the client's account.

9. A billing service system in accordance with claim 1 **characterized in that** the billing information comprises, items to be billed and the number of items to be billed, account numbers associated with the respective item, the account numbers referring to a customer's product database (26).

10. A billing service system according to claim 9, **characterized in that** invoices are sent to customers electronically, either directly in an e-mail (35) or on a web page (38) referred to from the e-mail, wherein the invoice contains a control button (39) which when pressed will activate a program that over the Internet initiates a special payment routine at a payment server (40) that fetches the telephone number of a personal telephone (33, 52) associated with the customer from the customer database (26) and initiates an associated telephony server (41) to setup a call from over the public phone network to the customers personal phone, the response from that phone being interpreted as an acceptance of whether the payment should be effectuated or not.

11. A billing service system in accordance with claim 10, **characterized in that** a customer places his order through the phone (33, 52) or via the web or WAP interface and directly afterwards receives his invoice by said e-mail (35).

12. A billing service system according to claim 9, **characterized in that**:
- the billing server (11) is provided with means for handling payments requested by a client (18) from a phone (33, 52) or a handheld computer, and
- transferring the corresponding amount in real time either to the client's bank account where it is available for payment with a card, or directly to a shop's account with a reference to the user and the purchase.

13. A billing service method wherein
- a client (18), independently of a payment system (17) for receiving payments from customers to said client, transfers billing information (8) over the Internet (12) to a billing server (11), which is freestanding from the payment system, in e-mail to a mailbox (27) serving the billing server (11), or in files transferred to a file-server serving the billing server,
- the billing server accesses the Internet only during short periods for polling the mailbox or file server and downloading information therein,
- the billing server initiates printing and/or distribution of invoices to customers (3) of the client, the invoices being based on the billing information, wherein the billing server (11) generates invoices based on the billing information provided by the client (18) of the system and generates an invoice with an OCR-reference number,
- the customers pay their respective invoices to a payment system,
- the billing server accesses a giro-server at the payment system with the billing service providers own OCR giro account, wherein the billing server uses a protocol of the giro server for capturing an amount paid, the date of payment, and the OCR reference number from the giro server, and
- the payment system (17) notifying the billing server of the received payments, the payments relating to the invoices.

14. A billing service method according to claim 13, wherein
- a billing server (11) receives information on payments from one or more payment systems (17),
- the billing server publishes information about invoices (29) and payments on a web or a WAP server (28) or on an FTP server from where it is available for a client (18).

## Patentansprüche

1. Verrechnungsdienstsystem mit einem Verrechnungsserver (11) zum Erstellen von Rechnungen auf der Grundlage von Verrechnungsinformationen, die von einem Mandanten (18) des Systems bereitgestellt werden, einer Einrichtung (25) zum Übertragen der Verrechnungsinformationen zum Verrechnungsserver, wobei die Einrichtung (25) E-Mail oder Dateien aufweist, die an den Verrechnungsserver adressiert sind und über das Internet (12) transportiert werden, und einem Zahlungssystem (17) zum Empfangen von Zahlungen von Kunden an den Mandanten und zum Benachrichtigen des Verrechnungsservers über die eingegangenen Zahlungen, wobei sich die Zahlungen auf Rechnungen beziehen, **dadurch gekennzeichnet, daß** der Verrechnungsserver vom Zahlungssystem unabhängig ist und Zugriff auf einen Giroserver im Zahlungssystem mit dem eigenen OCR-Girokonto des Verrechnungsdienstanbieters hat, wobei der Verrechnungsserver eine Rechnung mit einem OCR-Geschäftszeichen erstellt und ein Protokoll des Giroservers zum Erfassen eines gezahlten Betrags, des Zahlungsdatums und des OCR-Geschäftszeichens vom Giroserver verwendet.

2. Verrechnungsdienstsystem nach Anspruch 1, wobei der Mandant einen Computer (21) hat, **gekennzeichnet durch** Mandantensoftware (24), die auf dem Computer zum Aufbauen und Pflegen einer Datenbank (26) läuft, die eine Kundendatenbank und eine Produktdatenbank aufweist, wobei die Kundendatenbank Namens- und Anschriftinformationen über den Kunden des Mandanten aufweist, die Produktdatenbank für jedes Produkt Produktnamen und Produktpreis aufweist, sich die Verrechnungsinformationen auf Informationen in der Produkt- und Kundendatenbank beziehen, die Mandantensoftware (24) auf dem Computerbildschirm eine leere Rechnungsseite bereitstellt, die vom Mandanten mit Verrechnungsinformationen auszufüllen ist, die Mandantensoftware ferner die Verrechnungsinformationen formatiert und in die E-Mail oder Datei packt und die Mandantensoftware Code zum Weiterleiten der E-Mail oder Datei aufweist.

3. Verrechnungsdienstsystem nach Anspruch 1 mit einem Webserver (28) zur Kommunikation mit dem Mandanten (18), und wobei der Mandant einen Web- oder einen WAP-Browser (22) zum Aufrechterhalten der Kommunikation hat, **gekennzeichnet durch** Software, die auf dem Webserver (28) oder auf einem mit dem Webserver zusammenarbeitenden Server (42, 43, 44) zum Aufbauen und Pflegen einer Datenbank (26) läuft, die eine Kundendatenbank und eine Produktdatenbank aufweist, wobei die Kundendatenbank Namens- und Anschriftinformationen über den Kunden des Mandanten aufweist, die Produktdatenbank für jedes Produkt Produktnamen und Produktpreis aufweist, sich die Verrechnungsinformationen auf Informationen in der Produkt- und Kundendatenbank beziehen und die Website eine leere Rechnung bereitstellt, die über den Webbrowser auf dem Computerbildschirm angezeigt wird und die vom Mandanten mit Verrechnungsinformationen auszufüllen ist.

4. Verrechnungsdienstsystem nach Anspruch 1, 2 oder 3, **dadurch gekennzeichnet, daß** der Verrechnungsserver (11) mit einer Einrichtung (19) zum Verbinden mit dem Internet und Abfragen der Mailbox und des Dateiservers nur für kurze Zeitspannen mit der Hauptaufgabe versehen ist, E-Mails und Dateien darin herunterzuladen.

5. Verrechnungsdienstsystem nach Anspruch 1, 2 oder 3, **gekennzeichnet durch** mehrere Verrechnungsserver (42, 43, 44), die **durch** ein lokales Netzwerk (48) miteinander verbunden sind.

6. Verrechnungsdienstsystem nach Anspruch 1, 2 oder 3, **dadurch gekennzeichnet, daß** der Verrechnungsserver für jeden Mandanten ein Hauptbuch (23) aufweist, wobei das Hauptbuch ein Konto für jeden Kunden des Mandanten und jeden Kundensaldo aufweist.

7. Verrechnungsdienstsystem nach Anspruch 6, **dadurch gekennzeichnet, daß** der Verrechnungsserver für jeden Mandanten ein Buchhaltungssystem (50) aufweist, wobei Buchhaltungsinformationen durch den Server selbst erstellt oder über E-Mail- oder Dateiübertragung zum Verrechnungsserver (11) von der Mandantensoftware (24) oder von einem Webserver (28) oder von einem Webservercluster empfangen werden.

8. Verrechnungsdienstsystem nach Anspruch 7, **dadurch gekennzeichnet, daß** der Verrechnungsserver (11) mit einer Einrichtung zum Abwickeln von Zahlungen versehen ist, die von einem Mandanten (18) des Systems angefordert werden, wobei der Verrechnungsserver für die Zahlung auf dem Mandantenkonto aufgelaufene Mittel verwendet.

9. Verrechnungsdienstsystem nach Anspruch 1, **dadurch gekennzeichnet, daß** die Verrechnungsinformationen zu verrechnende Posten und die Anzahl zu verrechnender Posten sowie dem jeweiligen Posten zugeordnete Kontonummern aufweisen, wobei sich die Kontonummern auf eine Kundenproduktdatenbank (26) beziehen.

10. Verrechnungsdienstsystem nach Anspruch 9, **dadurch gekennzeichnet, daß** Rechnungen Kunden elektronisch zugestellt werden, entweder direkt in einer E-Mail (35) oder auf einer Webseite (38), auf die in der E-Mail verwiesen wird, wobei die Rechnung eine Steuerschaltfläche (39) enthält, die bei Betätigung ein Programm aktiviert, das über das Internet eine spezielle Zahlungsroutine in einem Zahlungsserver (40) initiiert, die die Telefonnummer eines dem Kunden zugeordneten persönlichen Telefons (33, 52) aus der Kundendatenbank (26) abruft und einen zugeordneten Fernsprechserver (41) initiiert, um eine Verbindung über das öffentliche Telefonnetz zum persönlichen Kundentelefon aufzubauen, wobei die Beantwortung von diesem Telefon aus als Zustimmung interpretiert wird, ob die Zahlung ausgeführt werden sollte.

11. Verrechnungsdienstsystem nach Anspruch 10, **dadurch gekennzeichnet, daß** ein Kunde seinen Auftrag über das Telefon (33, 52) oder über die Web- oder WAP-Schnittstelle erteilt und direkt danach seine Rechnung per E-Mail (35) erhält.

12. Verrechnungsdienstsystem nach Anspruch 9, **dadurch gekennzeichnet, daß**:
- der Verrechnungsserver (11) mit einer Einrichtung zum Abwickeln von Zahlungen versehen ist, die von einem Mandanten (18) über ein Telefon (33, 52) oder einen Handheld-Computer angefordert werden, und
- der entsprechende Betrag in Echtzeit entweder auf das Bankkonto des Mandanten, wo er zur Zahlung mit einer Karte verfügbar ist, oder direkt auf ein Ladenkonto unter Verweis auf den Benutzer und den Einkauf überwiesen wird.

13. Verrechnungsdienstverfahren, wobei
- ein Mandant (18) unabhängig von einem Zahlungssystem (17) zum Empfangen von Zahlungen von Kunden an den Mandanten Verrechnungsinformationen (8) über das Internet (12) zu einem Verrechnungsserver (11), der vom Zahlungssystem unabhängig ist, per E-Mail auf eine dem Verrechnungsserver (11) dienende Mailbox (27) oder in Dateien übermittelt, die zu einem dem Verrechnungsserver dienenden Dateiserver übertragen werden,
- der Verrechnungsserver auf das Internet nur während kurzer Zeitspannen zum Abfragen der Mailbox oder des Dateiservers und Herunterladen von Informationen darin zugreift,
- der Verrechnungsserver das Ausdrucken und/oder Verteilen von Rechnungen an Kunden (3) des Mandanten initiiert, wobei die Rechnungen auf den Verrechnungsinformationen beruhen, wobei der Verrechnungsserver (11) Rechnungen auf der Grundlage der Verrechnungsinformationen erstellt, die vom Mandanten (18) des Systems bereitgestellt werden, und eine Rechnung mit einem OCR-Geschäftszeichen erstellt,
- die Kunden ihre jeweiligen Rechnungen an ein Zahlungssystem bezahlen,
- der Verrechnungsserver auf einen Giroserver im Zahlungssystem mit dem eigenen OCR-Girokonto des Verrechnungsdienstanbieters zugreift, wobei der Verrechnungsserver ein Protokoll des Giroservers zum Erfassen eines gezahlten Betrags, des Zahlungsdatums und des OCR-Geschäftszeichens vom Giroserver verwendet, und
- wobei das Zahlungssystem (17) den Verrechnungsserver über die eingegangenen Zahlungen benachrichtigt, wobei sich die Zahlungen auf die Rechnungen beziehen.

14. Verrechnungsdienstverfahren nach Anspruch 13, wobei
- ein Verrechnungsserver (11) Informationen über Zahlungen von einem oder mehreren Zahlungssystemen (17) empfängt und
- der Verrechnungsserver Informationen über Rechnungen (29) und Zahlungen auf einem Web- oder einem WAP-Server (28) oder auf einem FTP-Server veröffentlicht, von dem aus sie für einen Mandanten (18) verfügbar sind.

## Revendications

1. Système de service de facturation comprenant un serveur de facturation (11) pour générer des factures sur la base d'informations de facturation fournies par un client (18) du système, des moyens (25) pour transférer les informations de facturation au serveur de facturation, dans lequel lesdits moyens (25) comprennent un courrier électronique, ou des fichiers adressés au serveur de facturation et transportés sur Internet (12), et un système de paiement (17) pour recevoir des paiements de consommateurs pour ledit client et pour informer le serveur de facturation des paiements reçus, les paiements concernant les factures, **caractérisé en ce que** le serveur de facturation est séparé du système de paiement et a un accès à un serveur de giros au niveau du système de paiement avec le compte giro d'OCR propre des fournisseurs de services de facturation, dans lequel le serveur de facturation génère une facture avec un numéro de référence d'OCR, et utilise un protocole du serveur de giros pour capturer un montant payé, la date du paiement, et le numéro de référence d'OCR auprès du serveur de giros.

2. Système de service de facturation selon la revendication 1, dans lequel le client a un ordinateur (21), **caractérisé en ce que** le logiciel de client (24) s'exécute sur ledit ordinateur pour élaborer et maintenir une base de données (26) qui comprend une base de données de consommateurs et une base de données de produits, la base de données de consommateurs comprenant des informations de nom et d'adresse concernant le consommateur du client, la base de données de produits comprenant, pour chaque produit, un nom de produit et un prix de produit, lesdites informations de facturation faisant référence à des informations dans lesdites bases de données de produits et de consommateurs, ledit logiciel de client (24) fournissant, sur l'écran d'ordinateur, une page de facture vide à remplir par le client avec des informations de facturation, ledit logiciel de client formatant et regroupant en outre lesdites informations de facturation dans ledit courrier électronique ou fichier, ledit logiciel de client comprenant un code pour acheminer ledit courrier électronique ou fichier.

3. Système de service de facturation selon la revendication 1, comprenant un serveur web (28) pour une communication avec le client (18), et ledit client comportant un navigateur web ou WAP (22) pour maintenir ladite communication, **caractérisé en ce qu'**un logiciel s'exécute sur ledit serveur web (28) ou sur un serveur (42, 43, 44) coopérant avec ledit serveur web pour élaborer et maintenir une base de données (26) qui comprend une base de données de consommateurs et une base de données de produits, la base de données de consommateurs comprenant des informations de nom et d'adresse concernant le consommateur du client, la base de données de produits comprenant, pour chaque produit, un nom de produit et un prix de produit, lesdites informations de facturation faisant référence à des informations dans lesdites bases de données de produits et de consommateurs, ledit site web fournissant une facture vide qui est présentée sur l'écran d'ordinateur par l'intermédiaire dudit navigateur web et qui doit être remplie par le client avec des informations de facturation.

4. Système de service de facturation selon la revendication 1, 2 ou 3, **caractérisé en ce que** ledit serveur de facturation (11) est pourvu de moyens (19) pour se connecter à Internet et pour scruter ladite boîte aux lettres électronique et le serveur de fichiers seulement pendant de courtes périodes de temps avec comme objectif principal de télécharger des courriers électroniques et des fichiers dans celui-ci.

5. Système de service de facturation selon la revendication 1, 2 ou 3, **caractérisé en ce que** plusieurs serveurs de facturation (42, 43, 44) sont interconnectés par un réseau local (48).

6. Système de service de facturation selon la revendication 1, 2 ou 3, **caractérisé en ce que** ledit serveur de facturation comprend, pour chaque client, un grand livre (23), ledit grand livre comprenant un compte pour chaque consommateur du client et chaque solde du consommateur.

7. Système de service de facturation selon la revendication 6, **caractérisé en ce que** ledit serveur de facturation comprend, pour chaque client, un système de tenue de comptabilité (50), des informations de tenue de comptabilité étant générées par le serveur lui-même ou reçues par l'intermédiaire d'un courrier électronique ou d'un transfert de fichier vers le serveur de facturation (11) à partir du logiciel de client (24) ou à partir d'un serveur web (28) ou à partir d'un groupe de serveurs web.

8. Système de service de facturation selon la revendication 7, **caractérisé en ce que** le serveur de facturation (11) est pourvu de moyens pour gérer les paiements demandés par un client (18) du système, le serveur de facturation utilisant, pour ledit paiement, les fonds accumulés sur le compte du client.

9. Système de service de facturation selon la revendication 1, **caractérisé en ce que** les informations de facturation comprennent des articles à facturer et le nombre d'articles à facturer, des numéros de compte associés à l'article respectif, les numéros de compte faisant référence à une base de données de produits et de consommateurs (26).

10. Système de service de facturation selon la revendication 9, **caractérisé en ce que** les factures sont envoyées électroniquement aux consommateurs, soit directement dans un courrier électronique (35), soit sur une page web (38) à laquelle il est fait référence dans le courrier électronique, dans lequel la facture contient un bouton de commande (39) qui, lorsqu'il est pressé, active un programme qui lance sur Internet un sous-programme de paiement spécial au niveau d'un serveur de paiement (40) qui extrait le numéro de téléphone d'un téléphone personnel (33, 52) associé au consommateur dans la base de données de consommateurs (26) et qui amène un serveur de téléphonie (41) associé à établir un appel sur le réseau téléphonique public vers le téléphone personnel du consommateur, la réponse de ce téléphone étant interprétée en tant qu'acceptation du fait que le paiement devrait être effectué ou non.

11. Système de service de facturation selon la revendication 10, **caractérisé en ce qu'**un consommateur émet sa commande par l'intermédiaire du téléphone (33, 52) ou par l'intermédiaire de l'interface web ou WAP et reçoit ensuite directement sa facture par ledit courrier électronique (35).

12. Système de service de facturation selon la revendication 9, **caractérisé en ce que** :
- le serveur de facturation (11) est pourvu de moyens pour gérer les paiements demandés par un client (18) à partir d'un téléphone (33, 52) ou d'un ordinateur portable, et
- pour transférer en temps réel le montant correspondant soit vers le compte bancaire du client où il est disponible pour un paiement avec une carte, soit directement sur un compte de magasin avec une référence à l'utilisateur et à l'achat.

13. Procédé de service de facturation dans lequel
- un client (18), indépendamment d'un système de paiement (17) pour recevoir des paiements de consommateurs pour ledit client, transfère des informations de facturation (8) sur Internet (12) vers un serveur de facturation (11), qui est séparé du système de paiement, dans un courrier électronique vers une boîte aux lettres électronique (27) desservant le serveur de facturation (11), ou dans des fichiers transférés vers un serveur de fichiers desservant le serveur de facturation,
- le serveur de facturation accède à Internet seulement pendant de courtes périodes pour scruter la boîte aux lettres électronique ou un serveur de fichiers et télécharger des informations dans celui-ci,
- le serveur de facturation lance une impression et/ou une distribution de factures vers les consommateurs (3) du client, les factures étant basées sur les informations de facturation, dans lequel le serveur de facturation (11) génère des factures sur la base des informations de facturation fournies par le client (18) du système et génère une facture avec un numéro de référence d'OCR,
- les consommateurs payent leurs factures respectives à un système de paiement,
- le serveur de facturation accède à un serveur de chèques au niveau du système de paiement avec le compte giro d'OCR propre des fournisseurs de services de facturation, dans lequel le serveur de facturation utilise un protocole du serveur de giros pour capturer un montant payé, la date de paiement, et le numéro de référence d'OCR auprès du serveur de giros, et
- le système de paiement (17) informe le serveur de facturation des paiements reçus, les paiements concernant les factures.

14. Procédé de service de facturation selon la revendication 13, dans lequel
- un serveur de facturation (11) reçoit des informations concernant des paiements d'un ou de plusieurs systèmes de paiement (17),
- le serveur de facturation publie des informations concernant des factures (29) et des paiements sur un serveur web ou WAP (28) ou sur un serveur FTP où elles sont disponibles pour un client (18).
